# EUROPEAN PATENT APPLICATION

(11) **EP 3 246 493 A1**
(43) Date of publication of application: **22.11.2017**
(21) Application number: 16305570.0
(22) Date of filing: 17.05.2016
(51) Int. Cl.: E04H 12/12, E04H 12/34, F03D 13/20

(54) **A METHOD FOR CONSTRUCTION OF A MAST FOR A WINDMILL**

(71) Applicant: Holcim Technology Ltd., 8645 Jona (CH)
(72) Inventor: DOBRUSKY, Svatopluk, 69003 LYON (FR); LEVY, Christophe, 38080 Saint-Marcel-Bel-Accueil (FR); CHANVILLARD, Gilles, 38790 Saint-Georges-d'Espéranche (FR)
(74) Representative: Regimbeau

(57) **Abstract**

The subject of the present invention is a method for construction of a mast for a windmill (2) along a vertical axis of extension, comprising a set of at least three concrete sections (10) higher than 35 m, each section having a height along an axis of extension
(A) and an outer diameter, said method comprising:
- producing on a production site said concrete sections (10) having an height higher than 10 m, and a ratio between the height of said section and the outer diameter of said section being higher than 2;
- transporting said sections (10) from the production site to an installation site with the axis of extension (A) in a horizontal direction; and
- assembling the mast of the windmill on the installation site by stacking all the sections of the set of sections one on top of the other along their axis of extension in a vertical direction.

## Description

### CONTEXT OF THE INVENTION

The present invention relates to the technical field of superstructures.

More particularly, the present invention relates to a method for construction of a mast for a windmill.

As the technology for producing electricity from wind energy has developed, it has been noted that there is a link between the power which can be delivered by the windmill and the dimensions of the windmill.

It is thus accepted that, in order to construct windmills capable of delivering high production powers, it is necessary to increase the length of the blades and therefore the height of the mast.

However, when increasing the height of a mast it is necessary to take into account a set of criteria which are connected on one hand to the desired technical performance of the mast, and on the other hand to the logistics of constructing the mast.

The technical performance criteria can comprise the load to be supported by the mast, and thus the compression resistance of the materials used, but also the tensile resistance of these materials.

Indeed, the tensile resistance is important as the loadings on the mast can cause significant tensile stresses.

The criteria connected to the logistics of constructing the mast can, for their part, comprise the transportation of the various elements which constitute the mast from the production site where these elements are made to the installation site, but also the conditions of assembling these elements on the installation site.

It is known that windmills are constructed with mast sections made of steel, concrete or a combination of these two materials.

Choosing steel as the material for the construction of the sections of the mast of a windmill permits simple and rapid execution of the method for constructing a windmill.

Indeed, such a construction method consists in transporting, by truck or by boat for the offshore windmill, a plurality of sections, generally of cylindrical or frustoconical shape, to the installation site of the windmill, then stacking these sections one on top of another with the aid of lifting gear so as to form the mast of the windmill.

However, the speed with which this method can be executed limits the high cost due to hiring the lifting gear and accessories, storage of equipment, accomodation of workers...

In order to increase the height of a mast made of steel, there are two solutions:
- to increase the diameter of the sections, in particular the base section which connects the mast to the foundations, or
- to increase the thickness of all the sections so as to increase the resistance of the mast.

However, these solutions are both limited by different constraints.

Increasing the thickness of the sections is, for its part, very costly as it is complex, in particular for producing the welds connecting the various plates which form a section. The welds represent the most sensitive point for a mast made of steel, and the slightest defect can render a windmill inoperable.

Moreover, only certain factories in the world have adequate experience with this technology, which limits the development of tall windmills which can use this solution.

Moreover, welds are particularly sensitive to fatigue, which limits the service life of the windmill. A treatment of the welds may be applied in order to extend this service life.

Moreover, the sections get heavier, and thus the total amount of sections must be increases in order to reduce the weight of a section. That increases a lot of installation time and costs.

Furthermore, that increases the total amount of the joints and therefore the amount of weak zones increases.

Document EP1889988 describes constructing a concrete mast for a windmill by stacking concrete sections formed of several segments distributed over the circumference of the sections. The segments are transported individually from the production site to the installation site, then assembled into a section.

The use of segments greatly facilitates transport to the installation site. Indeed, the segments may be stacked one on top of another on a truck and then assembled at the installation site for assembly into sections.

The use of segments also makes it possible to significantly increase the diameter of the sections and thus the height of the mast.

The use of concrete also makes it possible to increase the thickness of the segments and of the sections and thus the resistance of the mast.

Moreover, proper concrete joints are less susceptible to fatigue than steel welds and as concrete does not corrode it does not require special surface treatment and thus make it possible to obtain a mast with greater durability than with steel.

However, assembling a mast made of concrete on the installation site also has drawbacks. Indeed, the installation site must have an area for storing the segments arriving by truck and an area for assembling the segments into sections.

Moreover, this assembly process may be long and laborious and may be slowed or halted depending on the weather.

Moreover, the amount of horizontal joints and/or of vertical joints significantly increases, and therefore the amount of weak zones increases also. In addition, controlling the quality of the grouting of joints may be problematic at the construction site.

The large number of segments which can be delivered to the installation site requires, on one hand, the use of a large number of trucks and, on the other hand, requires the presence of multiple sets of lifting gear and workers on the installation site, which increases the industrial risk.

Document WO2009/121581 also describes a method for constructing a concrete mast for a windmill, by stacking concrete rings, said rings comprising several segments. The concrete rings show a very low height against a large diameter. A high number of horizontal joints is thus required, with the afore-mentioned drawbacks.

### SUMMARY OF THE INVENTION

The present invention aims to resolve some or all of these abovementioned drawbacks of steel and concrete solutions.

To that end, the present invention relates to a method for construction of a mast for a windmill along a vertical axis of extension, comprising a set of at least three concrete sections higher than 35 m, each section having a height along an axis of extension and an outer diameter. The method comprises the following steps:
- producing on a production site said concrete sections of the set of concrete sections of the mast of the windmill, said concrete sections having an height higher than 10 m, and a ratio between the height of said section and the outer diameter of said section being higher than 2;
- transporting said concrete sections from the production site to an installation site with their axis of extension in a horizontal direction; and
- assembling the mast of the windmill on the installation site by stacking all the sections of the set of sections one on top of the other along their axis of extension in a vertical direction.

Therefore every section of concrete of the set of sections is transported as one entire section. It is also possible to install tower internals inside a section on the production site, before transporting it to the installation site.

These steps make it possible to limit activity on the installation site and thus to reduce the industrial risk on the installation site.

Indeed, the constructing of the mast on the installation site just requires the aid of one lifting gear without further need on the installation site, which reduces a number of lifts usually needed for concrete masts to a number of lifts usually needed for steels masts.

A section may be a one-piece concrete section or a modular concrete section formed of a plurality of concrete portions.

For modular sections, the installation site does not require an area for storing the portion and an area for assembling the portion into sections.

Given that the actions to be carried out on the installation site are reduced, erection of the mast of the windmill is quicker and less subject to the vagaries of the weather.

Moreover, assembling the segments on the production site allows controlling the environment of the place where the segments are assembled and thus improve the quality of the assembling.

Furthermore, assembling the segments on the construction site allows for example to test the bearing capacity of the joints.

Manufacturing one or more one-piece sections reduces the total amount of joints and thus reduces risks related to their assembling and connection.

The use of concrete in this method makes it possible to limit the phenomenon of fatigue encountered in steel welds.

In contrast with a steel mast, the thickness of the concrete sections may easily be optimized so as to allow the mast of the windmill to reach a height of more than 100 m.

According to the invention, the part of the mast constituted by the set of concrete sections is thus higher than 35 m, preferably higher than 40 m and more preferably 45 m.

The use of concrete in this method also allows reducing the cost of manufacturing of the mast below the cost of manufacturing a similar steel mast, already from 80 m height, which it is not the case for the ordinary concrete solutions which become to be price competitive from 100 m height.

Thus, such a method makes it possible to take advantage of certain advantages provided by the use of a steel mast, in particular the ease of assembling the mast by stacking the various sections as they arrive straight from the construction site, and to take advantage of certain advantages provided by the use of a concrete mast, in particular the durability of the mast, the possibility of increasing wall thickness, and its compression resistance.

This embodiment of the method makes it possible to assemble each section as it is delivered and thus does not require the presence of a storage area for storing the various sections.

It must be understood that a production site is a place where the concrete elements are produced, and it may be or not in close proximity of the construction site, the installation site being the place where the windmill is intended to be erected.

Other preferred, although non limitative, aspects of the pixel circuit are as follows, isolated or in a technically feasible combination:
- the method comprises a step of producing on the production site one or more of said concrete sections using ultra-high performance concrete or ultra-high performance concrete reinforced with fibres and/or with ordinary reinforcement;
- the heights of the concrete sections are higher than 15 m and the ratio between the heights of said sections and the outer diameters of said sections is higher than 3;
- the outer diameter of the sections is less than 4.50 m;
- the sections have a wall thickness of less than 15 cm;
- the base section designed to support all the other sections of the set of concrete sections of the mast of the windmill has an outer diameter less than or equal to 4.50 m;
- at least one concrete section of the set of at least three concrete sections is a modular concrete section formed of a plurality of concrete portions distributed along the axis of extension;
- at least one concrete section of the set of at least three concrete sections is a one-piece concrete section;
- the method comprises a step of prestressing one or more of the concrete sections of the set of sections on the production site;
- the mast may comprise one or more steel sections;
- one or more sections of the set of sections may have a cylindrical shape.

The use of ultra-high performance concrete or ultra-high performance concrete reinforced with fibres and/or with ordinary reinforcement makes it possible to increase the compression resistance of the concrete and thus to reduce the thickness of a section with respect to the thickness of a traditional concrete section.

The reduction of the thickness allows increasing the height of the section for a similar weight of traditional concrete.

The increase of the height of the sections reduces the amount of horizontal joints and therefore the amount of weak zones.

### BRIEF DESCRIPTION OF DRAWINGS

In any case, the invention will be well understood with the aid of the following description, with reference to the appended schematic drawing showing, by way of non-limiting example, an example of an embodiment of the method according to the invention.
Figure 1 shows an exploded view of a modular section.
Figure 2 shows a perspective view of a modular section.
Figure 3 shows the transport of a modular section.
Figure 4 shows the construction of a windmill mast on the installation site.

### DETAILED DESCRIPTION

A mast 1 for a windmill 2 comprises a set of concrete sections 10 stacked one on top of another. The set comprises at least three concrete sections 10.

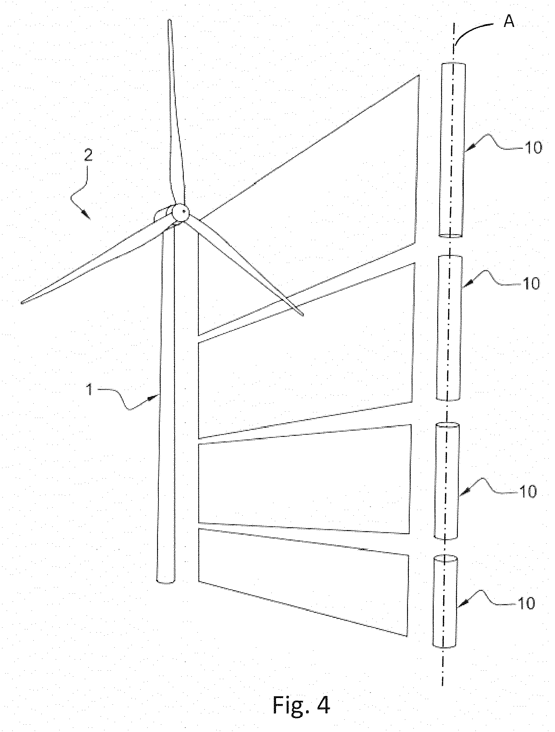

In the non-limiting example shown in Figure 4, this set of sections 10 comprises four sections 10.

According to the invention, this set of sections 10 comprises one or more modular concrete sections 10, and/or one or more one-piece concrete sections 10.

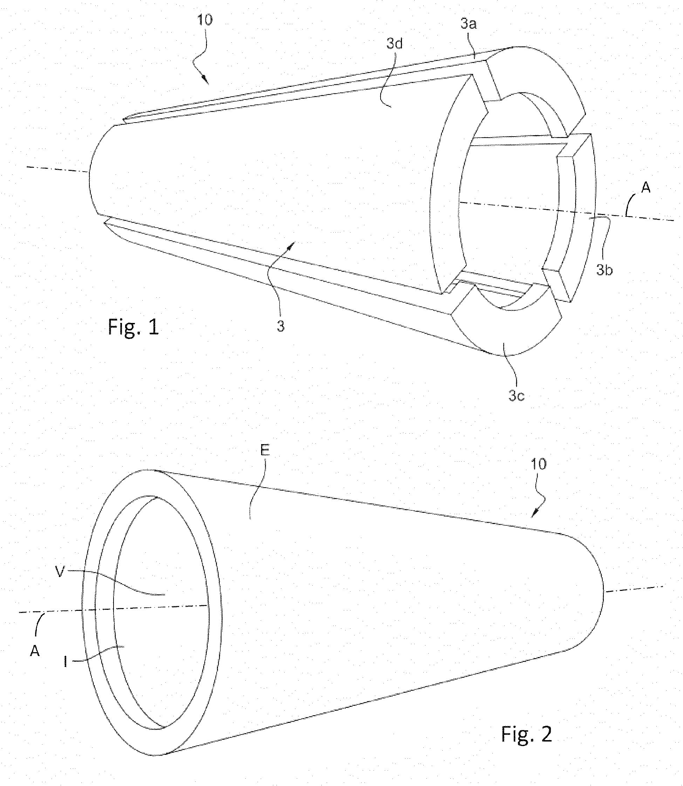

As shown in Figures 1 and 2, a section 10 extends along an axis of extension A. In the examples shown, each section 10 is in the frustroconical hollow shape defining an internal volume V of the section 10 and an outer face E and an inner face I which faces away from the outer face E and is arranged facing the internal volume V of the section 10. A section usually comprises:
- a first flange 11' extending substantially transversely from an inner face I of the section 10 in the internal volume V of the section 10, said first flange intended to exert a bearing force on a lower adjacent part of the windmill 2 along the axis of extension,
- a second flange 12' extending substantially transversely from the inner face I of the section 10 in the internal volume V of the section 10, said second flange intended to form a bearing support for another upper adjacent part of the windmill 2 along the axis of extension.

A modular section 10 may be formed by assembling a plurality of concrete portions 11, 12, 13 distributed along the axis of extension A, said portions comprising at least:
- a first portion 11 with a first extremity and a second extremity opposed to each other in the longitudinal direction, said first portion 11 comprising the first flange 11' at its first extremity 11 a, the second extremity 11 b of the first portion 11 is connected by a connecting interface 14 to another portion 13, and
- a second portion 12 with a first extremity 12a and a second extremity 12b opposed to each other in the longitudinal direction Y, said second portion 12 comprising the second flange 12' at its second extremity 12b.

In the example shown in Figure 2, the modular section 10 comprises three concrete portions 11, 12, 13, with an intermediate portion 13 between the first portion 11 and the second portion 12b. Of course, the present invention is in no way limited by the number of these concrete portions 3. A section 10 may also be made of a plurality of concrete segments extending along the axis of extension, distributed over the circumference of the section and assembled together.

Moreover, the mast may comprise one or more steel sections 10.

A one-piece concrete section 10 is not formed by assembling a plurality of portions or segments but is manufactured directly in a production site by moulding the concrete in formwork having the general shape and dimensions of the section 10.

Each portion 11, 12, 13 of the plurality of portions 11, 12, 13 forming a modular section 10 is also manufactured in a production site by moulding the concrete in formwork of determined shape and dimensions.

The concrete used is for example an ultra-high performance concrete or an ultra-high performance concrete reinforced with fibers and/or reinforced with ordinary reinforcement.

Ultra-high performance concrete (UHPC) and ultra-high performance concrete reinforced with fibers (UHPFRC) are understood to mean a concrete which has a characteristic compressive strenght value at 28 days greater than or equal to 120 MPa.

This ultra-high performance concrete reinforced with fibers and/or ordinary reinforcement may for example be of the same type as that marketed by the applicant under the Ductal^{®} brand.

Using this type of concrete makes it possible to create a lighter section 10 than with a traditional concrete, and thus allows transportation of essentially long pieces.

The method comprises producing on a production site the sections 10 of the set of concrete sections 10 of the mast 1 of the windmill 2.

According to one possible embodiment, at least one concrete section may be a modular concrete section formed of a plurality of concrete portions 11, 12, 13 distributed along the axis of extension A. The method may then comprise a step wherein the plurality of concrete portions 11, 12, 13 for forming the one or more modular sections 10 of the set of sections of the mast 1 are assembled on the production site.

All the sections of the set of sections 10 may be modular sections 10 or all the sections of the set of sections 10 may be one-piece sections 10.

Each sections have an height higher than 10 m, and the ratio between the height of said section and the outer diameter of said section is higher than 2. Preferably, each sections have an height higher than 15 m, and the ratio between the height of said section and the outer diameter of said section is higher than 3. More preferably, each sections have an height higher than 20 m, and the ratio between the height of said section and the outer diameter of said section is higher than 4.

The outer diameter of a section 10 formed in this manner is typically less than or equal to 4.50 m. Diameter means the largest dimension of the section in a cross-section perpendicular to the axis of extension A. Preferably, the base section 10 designed to support all the other sections 10 of the set of sections 10 of the mast 1 of the windmill 2 has an outer diameter less than or equal to 4.50 m.

Other limitations may be envisaged, for example the weight of a section 10 may not exceed 70 tonnes, which corresponds to the maximum weight which may be transported in one go by a truck.

This limit weight may define the maximum length and the maximum thickness of the section 10.

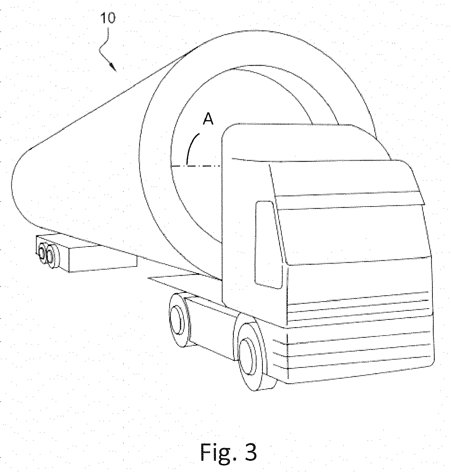

The length of the section 10 can reach several meters, that is why in the majority of cases an axis of extension A of a section 10 intended to be placed sensibly vertically when the mast 1 is erected as it is shown on the figure 4, is sensibly oriented horizontally when the section 10 is transported from the production site to the installation site, as it is shown on the figure 3.

The height of a section 10 can be measured along this axis of extension A.

According to one possible step of the method, each concrete section 10 is prestressed on the production site.

This prestress may be applied using means known to a person skilled in the art, or for example with the aid of a prestress device such as that described in the applicant's patent application FR 14/61713 or any other equivalent means by means of which a first stress can be applied on the production site and, advantageously, a second stress can be applied on the installation site of the mast 1.

By using such a prestress device, it is possible to apply a stress to the concrete on the production site such that the concrete stands up better to transport, in particular to tensile stresses.

By using such a prestress device, it is also possible to easily monitor the effects of concrete creep during the service life of the mast 1, in particular by monitoring the strain of the visible portion of the prestress device which extends outside the concrete section between the first flange and the second flange, while making it possible to easily monitor and if necessary to readjust the value of the stress acting on the concrete as a function of the result of this monitoring.

Similarly, the portions 11, 12, 13 may be assembled with one another using means known to a person skilled in the art, for example forming horizontal joints..

The stress applied on the production site to the section 10, must enable the section 10 to withstand the stresses produced when it is transported from the production site to the installation site and when it is positioned to its final position.

Being able to apply this stress on the production site makes this stress easier to apply and easier to control.

Moreover, it is possible to subject one section 10 to production site testing so as to certify the conformity of this section 10 with respect to a determined set of specifications, then to transport this section 10 to the installation site without having to dismantle it.

During a subsequent step shown in Figure 3, one or more of the sections 10 of the set of sections 10 of the mast 1 of the windmill 2 is transported to an installation site, at least one of these sections 10, for example the base section 10, being a modular concrete section 10 or a one-piece concrete section 10.

Ideally, the sections 10 are transported in an order starting from the section 10 intended to form the base of the mast 1 to the section 10 intended to form the top of the mast 1, then the sections 10 are stacked one on top of another using one lifting gear as they arrive on the installation site in order to not require a space for storing the sections 10 close to the installation site.

Although the invention has been described in connection with particular exemplary embodiments, it is obvious that it is in no way limited thereto and that it includes all the technical equivalents of the means described as well as the combinations thereof.

## Claims

**1.** A method for construction of a mast for a windmill (2) along a vertical axis of extension, comprising a set of at least three concrete sections (10) higher than 35 m, each section having a height along an axis of extension (A) and an outer diameter,
said method comprising the following steps:
- producing on a production site the concrete sections (10) of the set of concrete sections (10) of the mast (1) of the windmill (2), said concrete sections having an height higher than 10 m, and a ratio between the height of said section and the outer diameter of said section being higher than 2;
- transporting said concrete section (10) from the production site to an installation site with their axis of extension (A) in a horizontal direction; and
- assembling the mast of the windmill on the installation site by stacking all the sections of the set of sections one on top of the other with their axis of extension in a vertical direction.

**2.** The method according to claim 1, comprising a step of producing on the production site said concrete sections using ultra-high performance concrete or ultra-high performance concrete reinforced with fibres and/or with ordinary reinforcement.

**3.** The method according to any one of the preceding claims, wherein the height of the concrete sections is higher than 15 m and, and the ratio between the height of said concrete sections and the outer diameter of said section is higher than 3.

**4.** The method according to any one of the preceding claims, wherein the outer diameters of the concrete sections are less than 4.50 m.

**5.** The method according to any one of the preceding claims, wherein the concrete sections have a wall thickness of less than 15 cm;

**6.** The method according to any one of the preceding claims, wherein at least one concrete section of the set of at least three concrete sections (10) is a modular concrete section formed of a plurality of concrete portions (11, 12, 13) distributed along the axis of extension, and the method comprises assembling the plurality of the concrete portions to form the modular concrete section on the production site before transporting said modular concrete section to the installation site.

**7.** The method according to any one of the preceding claims, wherein at least one concrete section of the set of at least three concrete sections (10) is a one-piece concrete section.

**8.** The method according to any one of the preceding claims, comprising a step of prestressing one or more of the concrete sections of the set of sections on the production site.

**5.** The method according to any one of claims 1 to 4, wherein the base section designed to support all the other sections (10) of the set of sections (10) of the mast (1) of the windmill (2) is a modular section (10) or a one-piece section (10).

**6.** The method according to any one of claims 1 to 5, wherein the base section (10) designed to support all the other sections (10) of the set of sections (10) of the mast (1) of the windmill (2) has an outer diameter less than or equal to 4.50 m.

**7.** The method according to any one of the preceding claims, wherein the mast comprises one or more steel sections (10).

**8.** The method according to any one of the preceding claims, wherein one or more sections (10) of the set of sections (10) has a cylindrical shape.
